# EUROPEAN PATENT APPLICATION

(11) **EP 1 560 414 A1**
(43) Date of publication of application: **03.08.2005**
(21) Application number: 05250426.3
(22) Date of filing: 27.01.2005
(51) Int. Cl.: H04N 1/21, H04N 1/00

(54) **Film archiving system and method**

(30) Priority: 28.01.2004 JP 2004020479
(71) Applicant: Fuji Photo Film Co., Ltd., Kanagawa-ken (JP)
(72) Inventor: Sugaya, Kazuo c/o Fuji Photo Film Co., Ltd., Tokyo (JP); Kurihara, Masatake c/o Fuji Photo Film Co., Ltd., Tokyo (JP); Oidaira, Toshiaki c/o Fuji Photo Film Co., Ltd., Tokyo (JP)
(74) Representative: Stevens, Jason Paul

(57) **Abstract**

A film archiving system comprising manuscript sending terminals (10,40,60) of respective users and a film recording device (30) which records a manuscript uploaded from the manuscript sending terminals (10,40,60) of respective users via a network (90) to a film, wherein the manuscript sending terminals (10,40,60) include a manuscript converting device (70) which creates or inputs a manuscript converted to an electronic file and a first communication device (100e) which sends the created or inputted manuscript converted to an electronic file; and the film recording device (30) includes a second communication device (32) which receives the manuscript converted to an electronic file, which has been sent from each user's manuscript sending terminal (10,40,60), and a recording device (38) which records the received manuscript converted to an electronic file to a film (3).

## Description

### BACKGROUND OF THE INVENTION

### Field of the Invention

The present invention relates to a film archiving system and method, and more particularly to a film archiving system and a method for archiving a manuscript to a film.

### Description of the Related Art

When information is stored in an electronic medium as digital data, there is a problem of the preservation that unavoidably depends on hardware, an operating system (OS), application software, a format, a standard, and the like, for which technical innovation and transition are drastic. More specifically, it is not ensured that information stored in an electronic medium as digital data can be visibly reproduced in the future, and therefore, such storages are not suitable for preservation of information required to be securely preserved for a long time.

In order to resolve the problem, a embodiment for preserving information by visibly recording the information to a microfilm is being reevaluated and spread. For example, a film recording device which compresses an electronic file data of a manuscript recorded in an electronic medium such as an MD (mini disk) and then records the electronic file data to a roll-type or sheet-type microfilm, is used as a device for recording a manuscript to a microfilm.

However, conversion into a microfilm is periodically performed, for example, every month or every year. Furthermore, since it is impossible to determine the microfilm type and the recording state just before converting manuscripts to a microfilm, the type and the state are generally determined in advance between a user and a service provider. In the case of a roll-type microfilm, the user knows the quantity of microfilms used for recording only when the conversion into microfilms is completed.

In Japanese Patent Application Publication No. 5-151270, it is described that the manuscript is classified to a plurality of manuscript groups by partition panels so as to record to both of a microfilm and an electronic medium.

In Japanese Patent Application Publication No. 8-167043, it is described that a manuscript is recorded to a readable microfilm and only the text data thereof is stored in an external storage device. Furthermore, in Japanese Patent Application Publication No. 8-167043, it is also described that the electronic data is recorded to a microfilm in accordance with the check information of the mark sheet after reading a mark sheet attached with predetermined check information indicating only the required file or page of the electronic data stored in the external storage device.

In Japanese Patent Application Publication No. 2003-263440, a method of viewing a document or a drawing is described, which data is stored in a microfilm and an electronic medium, and which information is retrieved from the electronic medium and acquired in the form of a microfilm.

Conventionally, since it is generally required to input a manuscript converted to an electronic file into a film recording device via an electronic medium in order to convert the manuscript to a microfilm, it is hardly convenient for user.

### SUMMARY OF THE INVENTION

The present invention has been contrived in view of such circumstances, and an object thereof is to provide a convenient film archiving system and method which enable the user to easily utilize a remote film recording device when recording a manuscript to a microfilm for storage.

In order to achieve the above object, a first aspect of the present invention is directed to a film archiving system which comprises a manuscript sending terminal corresponding to each user and a film recording device which records the manuscript in a film by uploading the manuscript converted to the electronic file from the manuscript sending terminal via a network, characterized in that: the manuscript sending terminal includes a manuscript converting device which converts the manuscript to the electronic file, and a first communication device which sends the manuscript converted to the electronic file in each of the manuscript sending terminal; and the film recording device includes a second communication device which receives the manuscript which is sent from the manuscript sending terminal, and a recording device which records the received the manuscript in a film.

A second aspect of the present invention is directed to the film archiving system according to the first aspect, characterized in that: the manuscript sending terminal further comprises a setting device which sets up a film archiving condition to the recording device; the first communication device sends the film archiving condition set by the setting device; the second communication device receives the film archiving condition sent from the first communication device; and the recording device records the manuscript converted to the electronic file in the film so as to satisfy the film archiving condition received by the second communication device.

A third aspect of the present invention is directed to the film archiving system according to the second aspect, characterized in that the film archiving condition set by the setting device includes a classification condition according to the film such as a roll-type or sheet-type microfilm, and a black-and-white or color film.

A fourth aspect of the present invention are directed to the invention according to the second aspect, characterized in that the film archiving condition set by the setting device includes at least one of the following image allocation information: (1) image allocation information which indicates whether to record the manuscript only in portrait or both in portrait and in landscape; (2) image allocation information which indicates whether to record the manuscript of a larger size than a standard-size in the film by dividing the manuscript into multiple pieces or by reducing the size thereof; (3) image allocation information which indicates whether to record the manuscript of smaller size than the standard-size in the film by scaling the manuscript down smaller size than the standard-size or by enlarging the manuscript to be the same size as the size of the standard-size manuscript.

A fifth aspect of the present invention is directed to the film archiving system according to the second aspect, characterized in that: the film recording device further comprises a prediction device which predicts a result of archiving the received manuscript based on a file information including number and size of the manuscript converted to the electronic file, and on the film archiving condition set by the setting device; the second communication device sends the predicted result by the prediction device to the manuscript sending terminal of an appropriate user; and the manuscript sending terminal further comprises an output device which outputs the predicted result received by the first communication device.

A sixth aspect of the present invention is directed to the film archiving system according to the first aspect, characterized in that: the film recording device further comprises a setting device which sets up a film archiving condition to the recording device; and the recording device records the manuscript converted to the electronic file in the film so as to satisfy the film archiving condition set up by the setting device.

A seventh aspect of the present invention is directed to the film archiving system according to the sixth aspect, characterized in that the film archiving condition set by the setting device includes a classification condition according to the film such as a roll-type or sheet-type microfilm, and a black-and-white or color film.

An eighth aspect of the present invention is directed to the film archiving system according to the sixth aspect, characterized in that the film archiving condition set by the setting device includes at least one of the following image allocation information: (1) image allocation information which indicates whether to record the manuscript only in portrait or both in portrait and in landscape; (2) image allocation information which indicates whether to record the manuscript of a larger size than a standard-size in the film by dividing the manuscript into multiple pieces or by reducing the size thereof; (3) image allocation information which indicates whether to record the manuscript of smaller size than the standard-size in the film by scaling the manuscript down smaller size than the standard-size or by enlarging the manuscript to be the same size as the size of the standard-size manuscript.

A ninth aspect of the present invention is directed to the film archiving system according to the first aspect, characterized by further comprising a storage server which electronically archives the manuscript uploaded from the manuscript sending terminal, and then transfers the manuscript directed to be film archived from among the electronically archived manuscript to the film recording device.

A tenth aspect of the present invention is directed to the film archiving system according to the ninth aspect, characterized in that: the storage server sends a catalog of electronic archives of a corresponding user to the manuscript sending terminal when receiving instructions requesting a catalog of electronic archives; and the manuscript sending terminal further comprises an output device which outputs the catalog of the electronic archives received via the first communication device.

An eleventh aspect of the present invention is directed to the film archiving system according to the ninth aspect, characterized in that the storage server sends the catalog of the electronic archives with identification information added thereto, the identification information indicating, for each of the electronic archives, whether or not the electronic archive is the film archived manuscript.

A twelfth aspect of the present invention is directed to the film archiving system according to the first aspect, characterized in that the film recording device records the manuscript in the film for each period preset for the each user.

A thirteenth aspect of the present invention is directed to the film archiving system according to the first aspect, characterized in that the film recording device records the manuscript of the corresponding user when amount of the film to be used for film archiving and total number of frames to be film archived reach a setting value preset fo r the each user.

A fourteenth aspect of the present invention is directed to the film archiving system according to the first aspect, characterized in that: the manuscript sending terminal further comprises a direction device which directs a film archiving of the uploaded manuscript; the first communication device sends instruction contents which are directed by the direction device; and the film recording device records the manuscript of the corresponding user in the film when receiving the directed film archiving via the second communication device.

A fifteenth aspect of the present invention is directed to a method for film archiving, characterized by comprising the steps of: sending a manuscript which is converted to an electronic file, and a predetermined instruction contents, from a manuscript sending terminal corresponding to each user via a communication device; receiving the manuscript converted to the electronic file and the predetermined instruction contents via a network; predicting a archiving result of the received manuscript based on file information including a number and a size of the manuscript converted to the electronic file, and on a predetermined film archiving condition; sending the predicted archiving result to the manuscript sending terminal of the corresponding user; receiving and outputting the predicted archiving result; and recording the manuscript for which the archiving result has been predicted to a film when it is directed to perform film archiving.

According to the present invention, since it is possible to easily utilize a remote film recording device via a network when a manuscript is recorded to a microfilm for storage, it is possible to improve convenience to user.

### BRIEF DESCRIPTION OF THE DRAWINGS

The nature of this invention, as well as other objects and advantages thereof, will be explained in the following with reference to the accompanying drawings, in which like reference characters designate the same or similar parts throughout the figures and characterized in that:
Fig. 1 is a general schematic diagram of a film archiving system according to an embodiment of the present invention;
Fig. 2 is a schematic block diagram showing a conceptual internal configuration of a complex digital machine according to the embodiment;
Fig. 3 is a schematic block diagram showing a specific internal configuration example of the complex digital machine according to the embodiment;
Fig. 4 is a plan view showing of an example sheet of an electronic archiving instruction;
Fig. 5 is a plan view showing an example sheet of a catalog creation instruction;
Fig. 6 is a plan view showing an example sheet of a microfilm archiving instruction;
Fig. 7 is a plan view showing an example of a roll-type microfilm;
Fig. 8 is a plan view showing an example of a sheet-type microfilm;
Fig. 9 is a flowchart of processing in indirect type manuscript reading;
Fig. 10 is a flowchart of processing when indirect type electronic archiving is directed;
Fig. 11 is a flowchart of processing when indirect type microfilm archiving is directed;
Fig. 12 is a flowchart of processing in direct type manuscript reading;
Fig. 13 is a flowchart of processing when direct type microfilm archiving is directed;
Fig. 14 is a schematic diagram showing the archiving with a film archiving system according to the embodiment; and
Fig. 15 is a schematic diagram showing a service provided while security of a communication path is ensured.

### DETAILED DESCRIPTION OF THE PREFERRED EMBODIMENTS

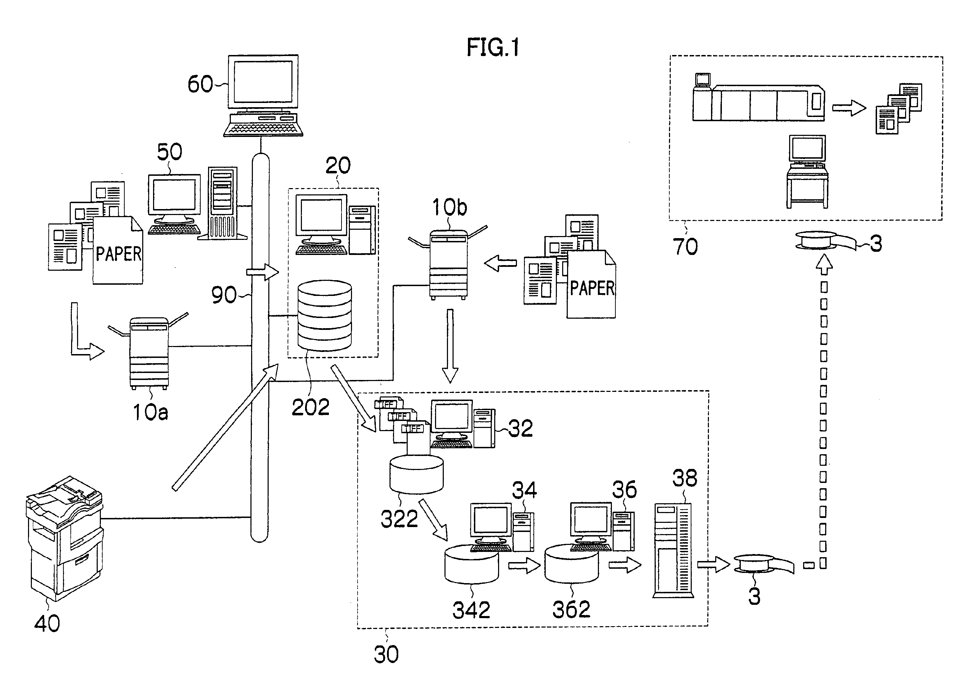

Fig. 1 is a general schematic diagram of a film archiving system according to an embodiment of the present invention.

As shown in Fig. 1, the film archiving system comprises: a plurality of complex digital machines 10 (10a and 10b); an electronic file storage server 20; a film recording device 30; a high-speed scanner 40; a management device 50; a user terminal 60; and a digital conversion device 70, which are connected to each other via a network 90.

In addition to functions for copying a manuscript and sending a manuscript through FAX, the complex digital machine 10 also has a function to read an instruction sheet in which the predetermined instruction contents are described and an archived manuscript (a manuscript to be archived), and a function to send the instruction contents in the instruction sheet and the manuscript converted an electronic file to an electronic file.

The electronic file storage server 20 is a server for storing an electronic file sent from the complex digital machine 10 and the like in a predetermined directory. More specifically, an electronic file is stored in a database 202 for electronic archiving. Hereinafter, storing such a manuscript converted to an electronic file is referred to as "electronic archiving". Also, the site to install the electronic file storage server 20 is hereinafter referred to as an "electronic archiving site".

The film recording device 30 compresses a manuscript converted to an electronic file at the viewable state so as to record to a microfilm 3. Hereinafter, recording such a manuscript converted to an electronic file is referred to as "MF (microfilm) archiving". Also, the site installed the film recording device 30 is hereinafter referred to as an "MF archiving site".

The high-speed scanner 40 is a dedicated machine for reading a manuscript at a high speed. Similarly to the complex digital machine 10, the high-speed scanner 40 is adapted to read the instruction sheet described the predetermined instruction contents and the archived manuscript, and to send the instruction contents in the instruction sheet and the manuscript converted to an electronic file.

The management device 50 is a device for which a predetermined administrator manages the situation of electronic archiving and the MF archiving. For example, the management device 50 preferably has functions related to security such as the user authentication, the restriction on viewing and copying of important documents, and the approval of the MF archiving.

The user terminal 60 is composed of a personal computer or the like, for a general user to input a manuscript as an electronic file. More specifically, the user terminal 60 has a document editing software for user to create an electronic file. The device for inputting a manuscript as an electronic file is not limited specifically, for example, a keyboard, a mouse or a voice input device may be used.

The digital conversion device 70 is a device for reproducing the electronic file by reading an image from the microfilm 3.

The complex digital machine 10 includes an indirect type complex digital machine 10a which utilizes an MF archiving site via an electronic archiving site, and a direct type complex digital machine 10b which directly utilizes an MF archiving site not via an electronic archiving site. The indirect type and direct type complex digital machines 10a and 10b are nearly similar to the internal configuration, but are different to the destination sending an electronic file. In other words, the indirect type complex digital machine 10a sends an electronic file to the electronic file storage server 20 at the electronic archiving site via the network 90, while the complex digital machine 10b sends an electronic file to the film recording device 30 at the MF archiving site via the network 90.

More specifically, the instruction sheet includes an electronic archiving instruction, a catalog creation instruction, and an MF archiving instruction, for example. The electronic archiving instruction is an instruction sheet for causing an electronic file, i.e., a digitized manuscript to be stored in a predetermined directory on the electronic file storage server 20 on the network 90. The catalog creation instruction is an instruction sheet for causing a catalog consisting of a list of electronic files stored in the electronic file storage server 20 to be created. The MF archiving instruction is an instruction sheet for causing an electronic file stored in the electronic file storage server 20 to be downloaded to the film recording device 30 and recorded to a microfilm, in the case of the indirect type complex digital machine 10a. On the other hands, the MF archiving instruction is instruction sheet for causing an electronic file to be directly downloaded to the film recording device 30 and recorded to a microfilm in the case of the direct type complex digital machine 10b.

The instruction sheet is not especially limited to the electronic archiving instruction, the catalog creation instruction, and the MF archiving instruction. Certainly, a different instruction sheet may be further provided.

The film recording device 30 comprises: an acceptance device 32, an editing device 34, a control device 36, and an archive recorder 38.

The acceptance device 32 is a device for receiving and accepting an electronic file to be MF archived. There are various aspects for accepting an electronic file to be MF archived. In a first aspect, an electronic file which has been sent from the indirect type complex digital machine 10a to the electronic file storage server 20 via the network 90 and stored in the electronic file storage server 20 is downloaded from the electronic file storage server 20. In a second aspect, an electronic file is downloaded from the direct type complex digital machine 10b via the network 90. In a third aspect, an electronic file sent from the high -speed scanner 40 is received. In a fourth aspect, an electronic file is received which has been originally inputted as an electronic file at the user terminal 60 and sent from the user terminal 60.

Each of the accepted electronic files is spooled to a spooling storage device 322 so as to wait for editing processing performed by an editing device 34, as described later.

The editing device 34 converts a group of electronic files spooled to the spooling storage device 322 of the acceptance device 32, to the image data recorded to a microfilm within an editing storage device 342.

The control device 36 is a device in which the image data recorded to the microfilm is given to the archive recorder 38 by storing the image data to be recorded to a microfilm which has been outputted from the editing device 34, in a shared holder 362.

The archive recorder 38 is a device to which the image data stored in the shared holder 362 is recorded to the microfilm 3. In other words, a manuscript converted to an electronic file is recorded to the microfilm 3 at the viewable state.

There are various aspects of setting each condition for recording manuscripts to a microfilm by the archive recorder 38 (i.e. the film archiving conditions). In a first aspect, a user sets the film archiving condition at the complex digital machine 10; the complex digital machine 10 sends the film archiving condition set at the complex digital machine 10; and the acceptance device 32 receives the film archiving condition sent from the complex digital machine 10. In a second aspect, an operator of an MF archiving service provider sets film archiving condition at the acceptance device 32. In a third aspect, an administrator sets the film archiving condition at the management device 50; the management device 50 sends the film archiving condition set at the management device 50; and the acceptance device 32 receives the film archiving condition sent from the management device 50. In a fourth aspect, a user sets the film archiving condition at the user terminal 60; the user terminal 60 sends the film archiving condition which is set at the user terminal 60; and the acceptance device 32 receives the film archiving condition which is sent from the user terminal 60.

The film recording device 30 records the electronic files in the microfilm 3 in a manner to satisfy the set film archiving condition. More specifically, the editing device 34 performs image editing of the manuscripts converted to electronic files, which have been received by the acceptance device 32, so that the set film archiving condition is satisfied, and the archive recorder 38 records those to the microfilm 3 under the control by the control device 36.

Examples of film archiving conditions capable to set are shown as following:
(Condition 1) Whether to perform recording to a roll-type film or a sheet-type film;
(Condition 2) Whether to perform recording to a black-and-white film or a color film;
(Condition 3) Whether to record manuscripts only in portrait, or both in portrait and in landscape;
(Condition 4) Whether to divide the manuscript into multiple pieces or to reduce the size, in the case of recording a manuscript larger than a standard-size manuscript; and
(Condition 5) Whether to record the manuscript in a size smaller than a size when a standard-size manuscript is recorded or to enlarge the manuscript to be the same size as the standard-size manuscript, in the case of recording a manuscript smaller than a standard-size manuscript.

The film recording device 30 makes predictions about the result of the MF archiving of the manuscripts on the basis of file information (manuscript size, portrait/landscape, number of sheets, and the like) according to the manuscripts converted to electronic files and the set film archiving condition. More specifically, for the manuscripts received by the acceptance device 32, the editing device 34 makes predictions about the result of the MF archiving of the manuscripts. The predicted archiving result is sent from the acceptance device 32 to a source which has requested the MF archiving, for example, the complex digital machine 10.

In the case in which the MF archiving has been directed by the complex digital machine 10, the prediction about the result of the MF archiving is sent from the acceptance device 32 to the complex digital machine 10, and the complex digital machine 10 receives the prediction about the result of the MF archiving and outputs the prediction about the result of the MF archiving.

In the case in which a period is set for each user in advance, the film recording device 30 records manuscripts of the user to a microfilm 3 for each period set in advance for the user.

In the case in which the total amount of used film or the total number of frames to be film archived reaches a setting value set for each user in advance, the film recording device 30 records manuscripts of a corresponding user when a total amount of used film for film archiving or a total number of frames to be film archived is set in advance for each user.

The electronic file storage server 20 provides a catalog creation service for creating a catalog of stored electronic files in addition to an electronic file storage service. More specifically, for example, when receiving instructions requesting a catalog of electronic archives (catalog creation instructions) from the complex digital machine 10, the electronic file storage server 20 creates a catalog of electronic archives in accordance with the content of the instructions and sends the catalog to the requesting device. At this time, if the catalog creation instructions have been sent from the complex digital machine 10, the electronic file storage server 20 sends the created catalog to the requesting complex digital machine 10, and an output device 100f of the complex digital machine 10 outputs the catalog.

When sending the catalog, the electronic file storage server 20 attaches, to each electronic file in the catalog, identification information indicating whether or not the electronic file is an MF archived manuscript. Therefore, from the catalog outputted by the complex digital machine 10, it is possible to know from the list which manuscripts have been MF archived.

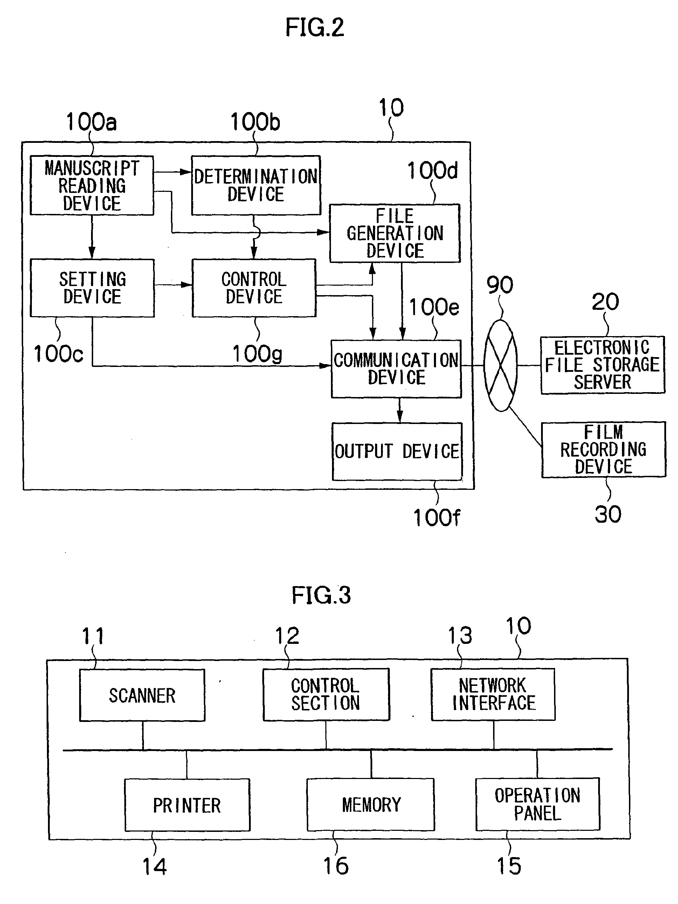

Fig. 2 is a schematic block diagram showing a conceptual internal configuration of a complex digital machine according to the embodiment.

As shown in Fig. 2, the complex digital machine 10 comprises a manuscript reading device 100a, a determination device 100b, a setting device 100c, a file generation device 100d, a communication device 100e, an output device 100f and a control device 100g.

The manuscript reading device 100a is a device for reading a manuscript. The manuscript described above includes an instruction sheet and a manuscript to be archived.

Based on the information in the manuscript read by the manuscript reading device 100a, the determination device 100b determines whether the read manuscript is a described instruction sheet or an archived manuscript. In other words, the determination device 100b determines whether the read manuscript is an instruction sheet or a manuscript to be archived, based on whether or not a two-dimensional barcode is printed at a predetermined position on the manuscript and in a predetermined format. Also, the determination device 100b also determines the kind of the instruction sheet based on the read two-dimensional barcode.

When a manuscript is determined to be an instruction sheet by the determination device 100b, the setting device 100c acquires the instruction contents shown in the instruction sheet. The instruction contents include an electronic archiving condition, a catalog creation condition, and a film archiving condition. If the instruction sheet is an electronic archiving instruction, the setting device 100c sets the electronic archiving condition. If the instruction sheet is a catalog creation instruction, the setting device 100c sets the catalog creation condition. If the instruction sheet is an instruction sheet for the MF archiving, the setting device 100c sets the film archiving condition.

If a manuscript is determined by the determination device 100b to be a manuscript to be archived, then the file generation device 100d converts the manuscript to an electronic file.

The communication device 100e sends the instruction contents of the instruction sheet acquired by the setting device 100c, and then the manuscript converted to an electronic file, which has been generated by the file generation device 100d. If the instruction sheet is an electronic archiving instruction, the communication device 100e sends the instruction contents for electronic archiving including the electronic archiving condition. If the instruction sheet is a catalog creation instruction, the communication device 100e sends the instruction contents for catalog creation including the catalog creation condition. If the instruction sheet is an MF archiving instruction, the communication device 100e sends the instruction contents for the MF archiving including the film archiving condition. Furthermore, when having sent the instruction contents for catalog creation, the communication device 100e receives a catalog sent from the electronic file storage server 20. On the other hand, when having sent the instruction contents for the MF archiving, the communication device 100e receives prediction of the result of the MF archiving, which is sent from the film recording device 30.

The control device 100g is device for sending the instruction content corresponding to each instruction sheets to the electronic file storage server 20 or the film recording device 30 via the network 90 by the communication device 100e.

In the indirect type complex digital machine 10a, the control device 100g causes the communication device 100e to send instruction contents so that a manuscript converted to an electronic file, which has been sent by the communication device 100e, can be stored in a predetermined directory on the electronic file storage server 20 on the network 90, in the case where the instruction sheet is an electronic archiving instruction. On the other hand, the control device 100g causes the communication device 100e to send instruction contents so that a manuscript converted to an electronic file, which has been stored in the electronic file storage server 20, can be downloaded to the film recording device 30 and recorded to a microfilm, in the case where the instruction sheet is an MF archiving instruction.

In the direct type complex digital machine 10b, the control device 100g causes the communication device 100e to send instruction contents so that a manuscript converted to an electronic file, which has been sent by the communication device 100e, can be stored in the acceptance device 32 on the network 90, and then the manuscript converted to an electronic file, which has been stored in the acceptance device 32, can be recorded to a microfilm by the archive recorder 38.

The output device 100f outputs a catalog received by the communication device 100e. The output device 100f also outputs the prediction about the result of the MF archiving, which has been received by the communication device 100e.

Fig. 3 is a schematic block diagram showing a specific internal configuration example of the complex digital machine 10 according to the embodiment.

As shown in Fig. 3, the complex digital machine 10 comprises: a scanner 11 which reads a manuscript; a control section 12 including a microprocessor; a network interface 13 enabling communication via the network 90; a printer 14 which records information to a print medium; an operation panel 15 having a liquid crystal display, a touch panel, and various operation buttons; and a memory 16.

Next, the correspondence relation between Fig. 2 and Fig. 3 is simply described below. The manuscript reading device 100a in Fig. 2 includes the scanner 11 in Fig. 3; the determination device 100b in Fig. 2 includes the control section 12 in Fig. 3; the setting device 100c in Fig. 2 includes the scanner 11 and the control section 12 in Fig. 3; the file generation device 100d of Fig. 2 is mainly constituted by the control section 12 of Fig. 3; the communication device 100e in Fig. 2 includes the network interface 13 in Fig. 3; the output device 100f in Fig. 2 includes the printer 14 and the operation panel 15 in Fig. 3; and the control device 100g in Fig. 2 includes the control section 12 in Fig. 3.

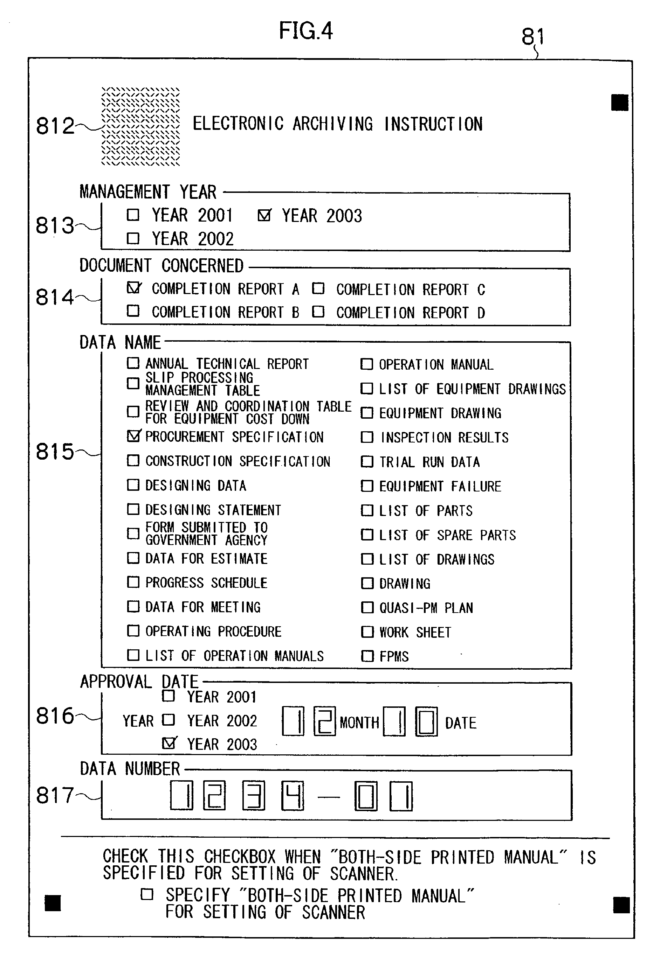

Fig. 4 is a plan view showing of an example sheet of an electronic archiving instruction 81. As shown in Fig. 4, a two-dimensional barcode 812 is for indicating that an electronic archiving instruction is the form in a particular format. Each of a "Management Year" column 813, a "Document Concerned" 814 column, and a "Data Name" column 815 includes a plurality of check boxes. Each of items corresponding to the check boxes in the columns is adapted to a holder for storing a group of electronic files which are obtained by the read manuscripts. For example, if checking all of the check boxes as following: a "Year 2003", a "Completed Report A"; and a "Purchase Specification", a group of electronic files read by the complex digital machine 10 are stored in a "Purchase Specification" holder in the electronic file storage server 20, the "Purchase Specification" being a lower rank than the "Completion Report A" holder which is a lower rank than the "Year 2003" holder. An "Approval Date" column 816 is a column for entering date, month, and year when the archive is approved. When a group of electronic files are collectively acquired in the MF archiving, a "Data Number" column 817 is used as index information about the electronic files. An electronic archiving instruction is not especially limited to the example shown in Fig. 4.

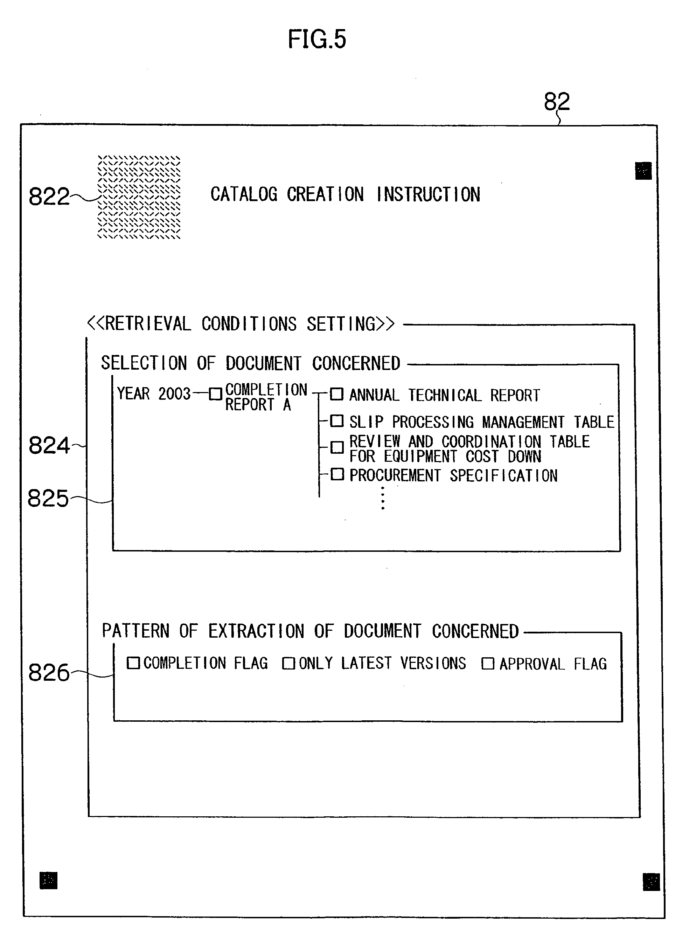

Fig. 5 is a plan view showing an example sheet of a catalog creation instruction 82. As shown in Fig. 5, a two dimensional barcode 822 is for indicating that an instruction sheet is the form for catalog creation in a particular format. A "Retrieval Conditions Setting" column 824 is a column for setting the condition for retrieving an electronic file when a catalog is created. A "Selection of Document Concerned" column 825 is a column for setting a directory to be retrieved. A "Document Concerned Extraction Pattern" column 826 is a column for setting a more detailed condition. For example, it is possible to set a retrieval condition, such as a retrieving only electronic files for which a "completion flag" is set, a retrieving only "the latest versions", and a retrieving only electronic files for which an "approval flag" is set. The instruction sheet for catalog creation is not limited to the example shown in Fig. 5.

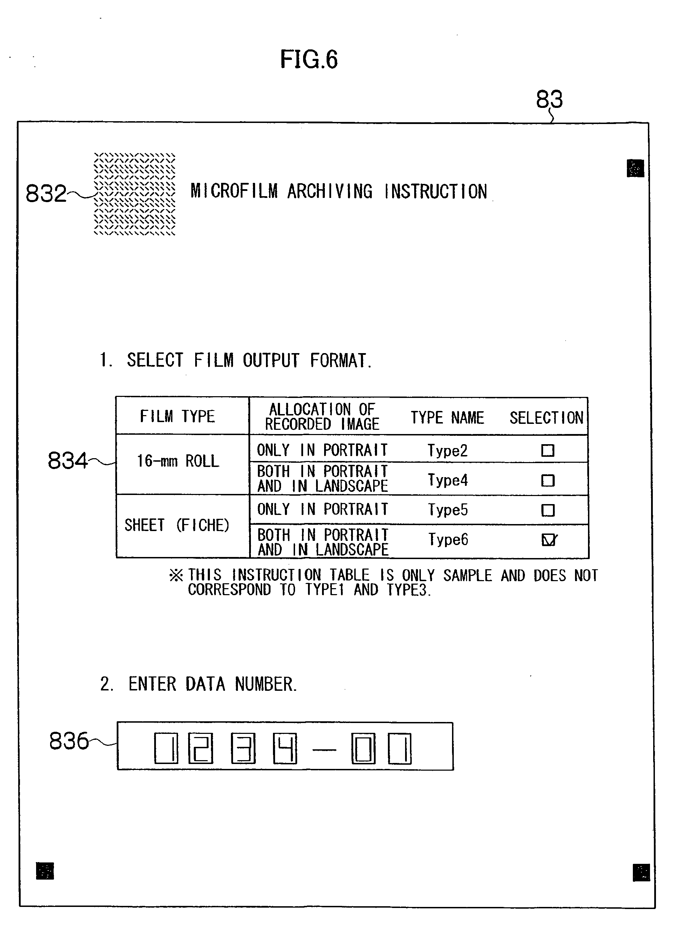

Fig. 6 is a plan view showing an example sheet of a microfilm archiving instruction 83. As shown in Fig. 6, a two dimensional barcode 832 is for indicating that an instruction sheet is the form for microfilm archiving in a particular format. In a "Selection of Film Output Format" column 834, there are provided check boxes for a user to select an output format of a microfilm. In Fig. 6, selection can be made between a "Roll" type (16 mm) and a "Sheet" type (FICHE), and between an "Only in Portrait" and a "Both in Portrait and in Landscape". More specifically, when a check box corresponding to a "Type2" is checked, the recording is performed only in portrait on a roll-type microfilm. If a check box corresponding to a "Type4" is checked, the recording is performed both in portrait and in landscape on a roll-type microfilm. When a check box corresponding to a "Type5" is checked, the recording is performed only in portrait on a sheet-type microfilm. When a check box corresponding to a "Type6" is checked, the recording is performed both in portrait and in landscape on a sheet-type microfilm.

In a "Specification for Film Title Frame" column 836, the content to be displayed in a film title frame can be specified by a "Data Number".

First, the manuscript reading device 100a in the complex digital machine 10 reads the information checked to the check boxes in the two-dimensional barcode 832 and the "Selection of Film Output Format" 834, and the manually written data number in the MF archiving instruction sheet 83. Then, each thereof is decoded and determined by the determination device 100b. Therefore, an electronic file to be MF archived is identified and an output format is acquired. The MF archiving instruction is not especially limited to the example sheet shown in Fig. 6.

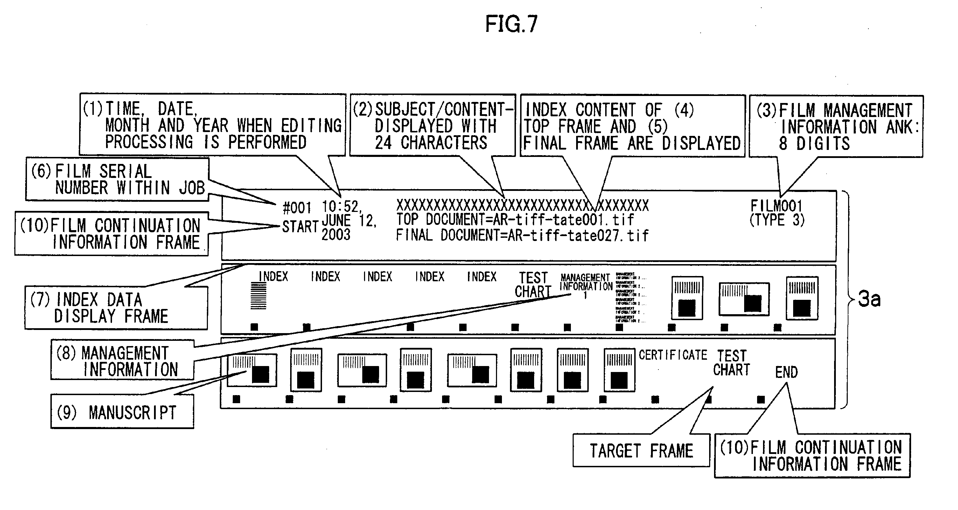

Fig. 7 is a plan view showing an example of a roll-type microfilm 3a. In the microfilm 3a, information is recorded as following:
(1) Time, date, month, and year when editing processing is performed;
(2) Subject and content;
(3) Film management information;
(4) Content of index of the top frame;
(5) Content of index of the final frame;
(6) Film serial number within job;
(7) Index data;
(8) Management information;
(9) MF archived manuscripts; and
(10) Film continuance information ("start", "to be continued" and "end").

On the microfilm 3a shown in Fig. 7, the manuscripts are recorded at the viewable state in an output format for recording manuscripts both in portrait and in landscape.

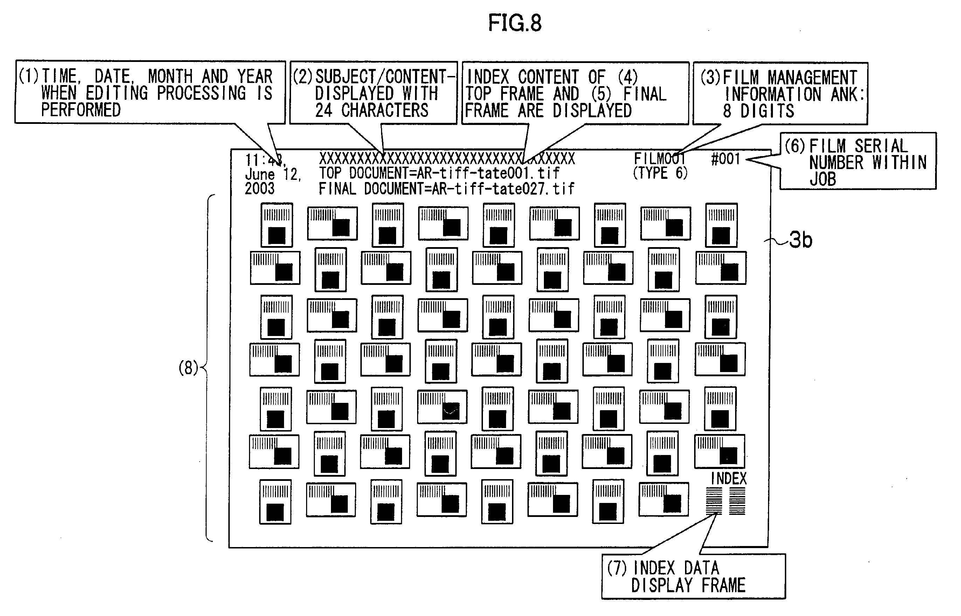

Fig. 8 is a plan view showing an example of a sheet-type microfilm 3b. In the microfilm 3b, information is recorded as following:
(1) Time, date, month, and year when editing processing is performed;
(2) Subject and content;
(3) Film management information;
(4) Content of index of the top frame;
(5) Content of index of the final frame;
(6) Film serial number within job;
(7) Index data; and
(8) MF archived manuscripts.

On the microfilm 3b shown in Fig. 8, manuscripts are recorded at the viewable state in an output format for recording manuscripts both in portrait and in landscape.

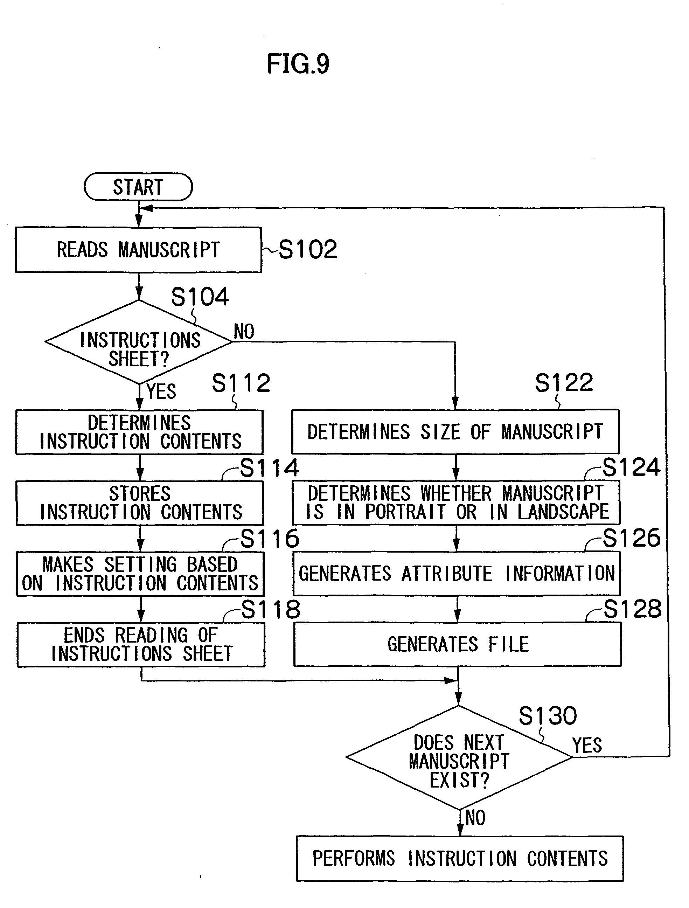

Next, schematic flows according to the service processing are shown in Figs. 9 through 13.

Fig. 9 shows a flow of processing from reading a manuscript to creation o f an electronic file in the case of an indirect type.

First, a manuscript is read by the complex digital machine 10 at step S 102. More specifically, the scanner 11 of the complex digital machine 10 reads the information shown on each manuscript. In this case, the manuscript includes a manuscript to be archived, in addition to an instruction sheet such as the electronic archiving instruction and the MF archiving instruction, as described above. In general, in the case of the electronic archiving instruction, the archived manuscripts are subsequently read after the electronic archiving instruction is read. In the case of the MF archiving instruction for directing the MF archiving in comparison with an electronically archived manuscript, since the archived manuscripts have been already read after the electronic archiving instruction was read, reading of the archived manuscripts generally does not continued from reading the MF archiving instruction. Therefore, reading the manuscript is completed. In addition, it is also possible to continuously read the electronic archiving instruction, the MF archiving instruction, and the archived manuscripts, so as to direct both of electronic archiving and the MF archiving.

When a manuscript has been read, it is then determined whether the read manuscript is an instruction sheet in which particular instruction contents is described or a manuscript to be archived, on the basis of the information shown on the manuscript read by the scanner 11 (step S104). More specifically, it is determined whether or not the manuscript is an instruction sheet by determining whether a two-dimensional barcode is printed at a predetermined position on the read manuscript and in a predetermined format.

If it is determined that the read manuscript is an instruction sheet, then the instruction contents shown on the instruction sheet is determined (step S112).

More specifically, first, the outline of the instruction contents is acquired by decoding the two-dimensional barcode and determining the kind of the instruction sheet (i.e. determining whether the instruction sheet is an electronic archiving instruction, a MF archiving instruction, or the like).

Second, the further detailed instruction contents are acquired on the basis of the check marks by recognizing the presence/absence of check marks in the check boxes provided at positions which are predetermined for each kind of instruction sheets. In the case of the electronic archiving instruction 81 shown in Fig. 4, the location for storing a manuscript converted to an electronic file is identified on the basis of presence/absence of check marks in the check boxes provided in each of the "Management Year" column 813, the "Document Concerned" column 814, and the "Data Name" column 815. In the case of the MF archiving instruction 83 shown in Fig. 6, a microfilm 3 for storing the manuscript is identified on the basis of presence/absence of check marks in the check boxes provided in the "Selection of Film Output Format" column 834 such as a film type, an allocation of the recorded images, and the like.

Third, the detailed instruction contents are acquired by recognizing a character string written by hand in a column for manually written characters which are provided at a position predetermined for each kind of instruction sheets. In the case of the electronic archiving instruction 81 shown in Fig. 4, the information in the "Approval Date" column 816 and the "Data Number" column 817 is acquired. In the case of the MF archiving instruction 83 shown in Fig. 6, an electronic file recording to the microfilm 3 is identified from the data number in the "Data Number" column 836, and from the data number already specified in the "Data Number" column 817 of the electronic archiving instruction 81 shown in Fig. 4.

The determined instruction contents are temporarily stored in the memory 16 of the complex digital machine 10 at step S114, various setting processings are performed based on the instruction contents at step S116, and the processing of reading the instruction sheet is completed at step S118.

When the processing of reading the instruction sheet is completed, it is determined whether or not the next manuscript exists at step S130. If the next manuscript does not exist, the process proceeds to a step of performing instruction contents (step S140). If the next manuscript exists, the process returns to the step of reading a manuscript (step S102).

In the case in which a new instruction sheet is read separately from the instruction sheet read before at the step of reading a manuscript (i.e. at step S102), the determination of instruction contents at step S112, the storage of the instruction contents at step S114, and the setting on the basis of the instruction contents at step S116 are further performed to the new instruction sheet. For example, if a MF archiving instruction is read subsequently after an electronic archiving instruction, instruction contents of both instruction sheets are stacked in the memory 16 of the complex digital machine 10, and are configured on the basis of contents of both instruction sheets. When the processing of reading the new instruction sheet is completed, it is determined whether or not the next manuscript exists at step S130. If the next manuscript does not exist, the process proceeds to the step of performing instruction contents (step S140). If the next manuscript exists, the process again returns to the step of reading a manuscript (step S102).

If the read manuscript is determined to be an archived manuscript, the size of the manuscript is determined at step S122, length and breadth of the manuscript are determined at step S124, attribute information (here, manuscript size, and portrait/landscape) is generated at step S126, and an electronic file attached with attribution information is generated at step S128. The electronic file may be generated as a separate electronic file for each manuscript (i.e., for each page), or as one electronic file for a group of multiple manuscripts (i.e., for multiple pages). In the following description, it is assumed that an electronic file is generated for each of manuscripts.

When generation of an electronic file is completed, it is then determined whether or not the next manuscript exists at step S130. If the next manuscript exists, the process again returns to the step of reading a manuscript (step S102). If the next manuscript does not exist, the process proceeds to the step of performing instruction contents (step S140).

When more than two kinds of instruction sheet have been attached and read, the instruction contents thereof are stacked in the memory 16, and processing is performed at a predetermined timing for the instruction contents of each instruction sheets.

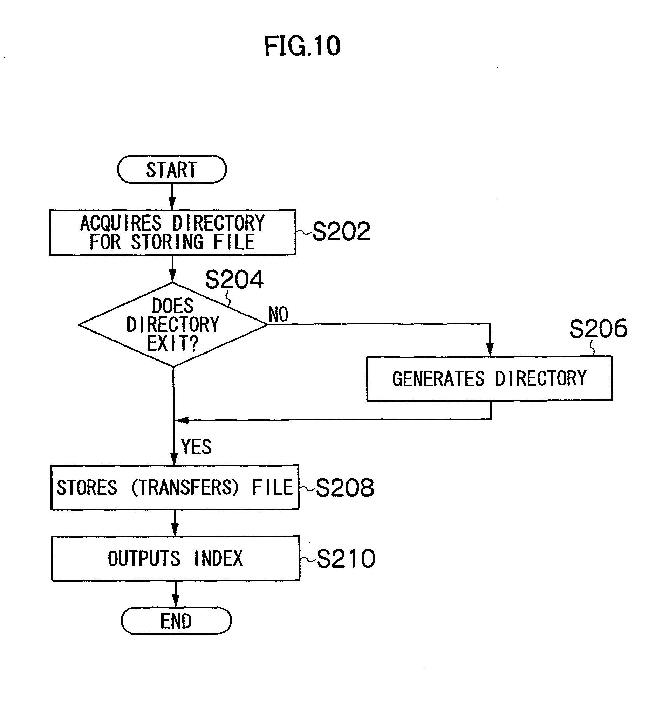

Fig. 10 is a detailed flowchart of the processing when indirect type electronic archiving is directed at step S140.

First, on the basis of the instruction contents of an instruction sheet, a directory path to a destination for storing an electronic file is acquired at step S202. More specifically, in the case of the electronic archiving instruction shown in Fig. 4, a directory path is identified on the basis of presence/absence of check marks in the check boxes provided in each of the columns of "Management Year" 813, the "Document Concerned" 814, and the "Data Name" 815.

Next, it is determined whether or not a directory corresponding to the directory path has been created at step S204. More specifically, presence/absence of the directory is confirmed by inquiring of the electronic file storage server 20 about it. If the specified directory has not been created, the specified directory is newly created at step S206. More specifically, the electronic file storage server 20 is caused to newly create the directory.

Next, the electronic file storage server 20 is specified as the storage destination, and the electronic file is sent thereto from the complex digital machine 10 to cause the electronic file storage server 20 to store the electronic file in a predetermined format and in a predetermined directory (step S208). At this time, in addition to the manuscript size and the manuscript allocation (the portrait/landscape), the electronic file is attached an attribute information such as reading resolution, tone, color, or black-and-white, time and date of reading, identification information about a reading device, and the like. The electronic file attached with the attribute information is transferred from the complex digital machine 10 to the electronic file storage server 20, and stored by the electronic file storage server 20.

Then, when the file has been stored in the specified directory, a "storage completion report" is outputted at step S210. More specifically, a storage completion report is printed out by the complex digital machine 10 in which bibliographic items (title, storage directory, number of manuscripts, time and date of storage and the like), and reduced images (thumbnails) of the instruction sheet and the first archived manuscript are combined.

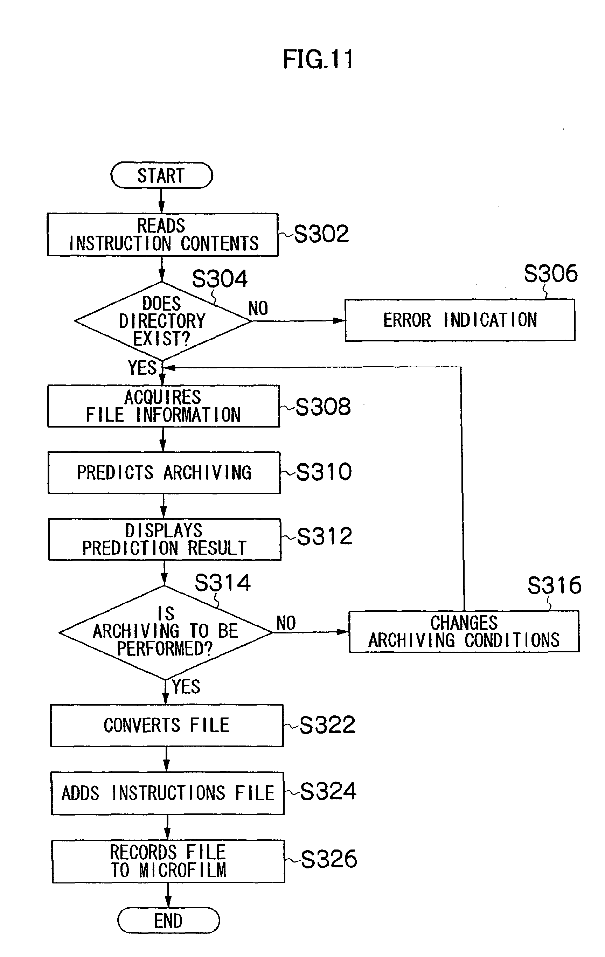

Fig. 11 is a flowchart of the processing when indirect type microfilm archiving is directed at step S140.

First, the instruction contents temporarily stored in the memory 16 is acquired at step S302. More specifically, the film archiving condition such as a film type (whether roll-type or sheet-type), the allocation of recorded images (whether in only portrait or both in portrait and in landscape) and whether black-and-white or color, and information required for identifying a directory (such as a data number) are acquired.

Next, presence/absence of the directory is determined at step S304. If the directory does not exist, an error indication is displayed at step S306. In the case of the instruction sheet for the MF archiving shown in Fig. 6, a directory in which an electronic file corresponding to the data number is retrieved by the electronic file storage server 20 on the basis of a data number.

Next, the file information is acquired at step S308, a result of the MF archiving is predicted at step S310, and the prediction result is displayed at step S312. More specifically, first, the attribute information (the manuscript size and the portrait/landscape) about electronic files to be converted to a microfilm, the number of files, and the like are acquired as file information. Next, the number of frames (a total number of sheets) generated when the files are converted to a microfilm, the number of reels required and the like are calculated on the basis of the file information and film archiving condition set in advance (the film type, the allocation of recorded images, and the like), and then the calculation result is displayed for the user as the prediction result. For example, the file information and the film archiving condition are transferred by the electronic file storage server 20 to the film recording device 30; the archiving result predicted by the film recording device 30 is transferred by the electronic file storage server 20 to the complex digital machine 10; and the predicted result is displayed on the operation panel 15 of the complex digital machine 10. At this time, the prediction may be made by the electronic file storage server 20 or the complex digital machine 10 itself.

Next, an operation of a direction on whether or not to perform the MF archiving is accepted after the predicted the MF archiving result is displayed (step S314). If the MF archiving is not to be performed, an operation of a direction to change film archiving condition is accepted at step S316. Then, the acquisition of file information at step S308, prediction of archiving at step S310, and the display of the prediction result at step S312 are performed again.

When the MF archiving is performed, the film recording device 30 is caused to download a manuscript converted to an electronic file which is stored in the electronic file storage server 20, so as to perform file conversion (step S322). More specifically, it is checked whether or not the electronic file specified to be converted to a microfilm satisfies predetermined condition, and then file conversion is performed on the basis of file information and film archiving condition as necessary. For example, when a colored electronic file is recorded to a black-and-white microfilm, conversion into black and white is performed. In this case, the original electronic file is left as it is. Film archiving condition and other specified conditions are managed as a separated file (step S324). The specified condition for conversion into a microfilm includes: the film type; the allocation of recorded images (only in portrait or both in portrait and in landscape); the reduction/division; the presence/absence of certificate; the title of microfilm, and the like. The specified condition for conversion into a microfilm is added as a separate file. Then, the film recording device 30 is caused to record the manuscript to a microfilm at step S324.

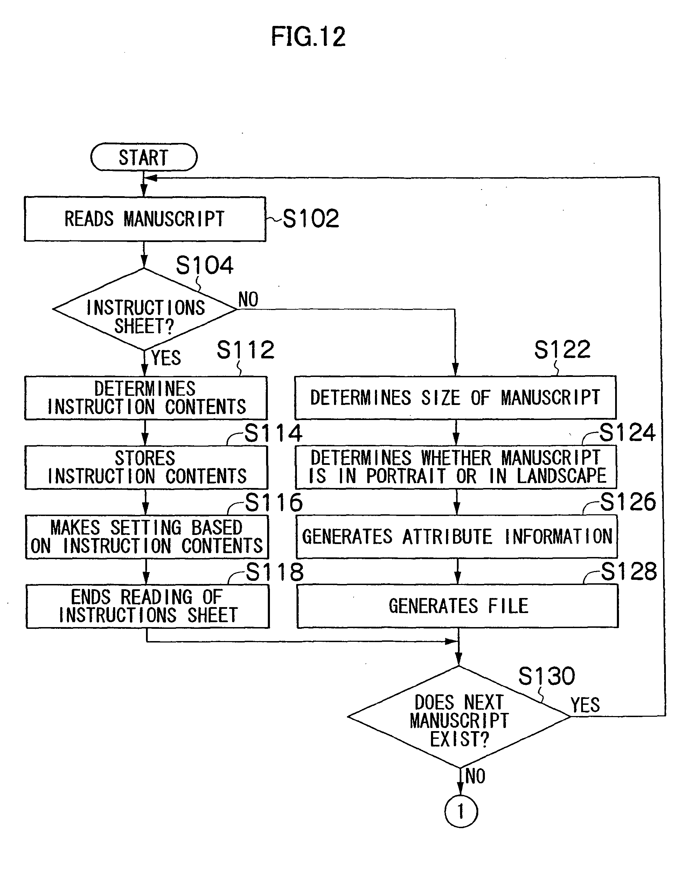

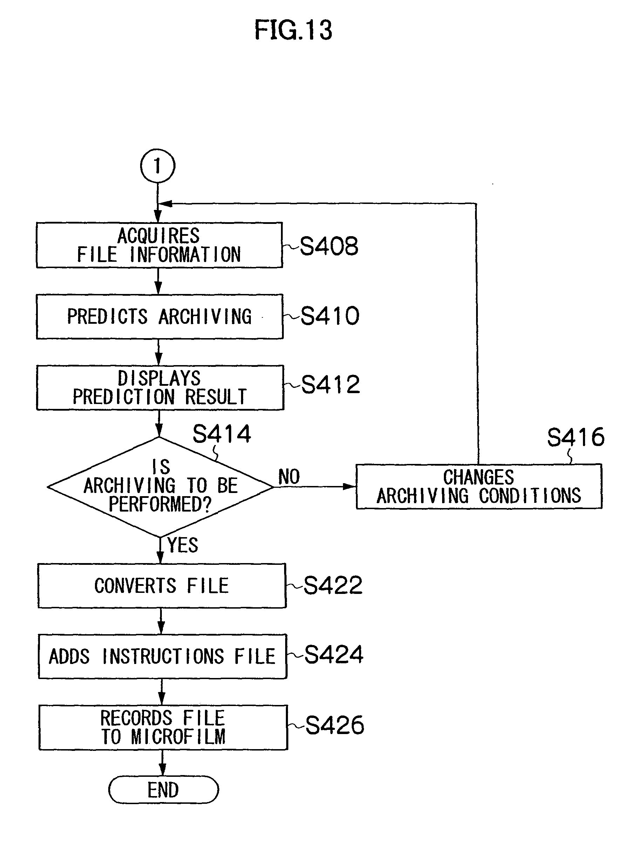

Figs. 12 and 13 are flowcharts showing the processing in the case where instructions for direct type MF archiving are given.

The steps S102 to S 130 shown in Fig. 12 are similar to the respective steps shown in Fig. 9 as described above, and therefore detailed description thereof will not be provided. In the description below, it is assumed that an MF archiving instruction described instructions for the MF archiving and archived multiple manuscripts have been read as manuscripts.

When all the manuscripts have been read and there is no more manuscripts, file information is acquired at step S408, a result of the MF archiving is predicted at step S410, and the prediction result is displayed at step S412. More specifically, the attribute information (the manuscript size, the portrait/landscape, and the like) of electronic files which is converted to a microfilm, the number of files and the like, are acquired as file information. Next, the film archiving condition which is set in advance (the film type, the allocation of recorded images, and the like), the number of frames (a total number of sheets) generated when the files are converted to a microfilm, the number of reels required , and the like are calculated on the basis of the file information, and then the calculation result is displayed for the user as the prediction result. For example, the file information and the film archiving condition are sent from the complex digital machine 10 to the film recording device 30; and the archiving result predicted by the film recording device 30 is returned to the complex digital machine 10, and is displayed on the operation panel 15 of the complex digital machine 10. The prediction may be made by the complex digital machine 10 itself.

Next, an operation of a direction on whether or not to perform the MF archiving is accepted after the predicted MF archiving result is displayed (step S414). If the MF archiving is not to be performed, an operation of a direction to change film archiving condition is accepted at step S416, and the acquisition of file information at step S408, and then prediction of archiving at step S410 and the display of the prediction result at step S412 are performed again. When the MF archiving is performed, the film recording device 30 is caused to convert the files at step S422, and then the specified condition for conversion into a microfilm are managed as a separate file at step S424. Then the film recording device 30 is caused to record the manuscripts to a microfilm at step S426.

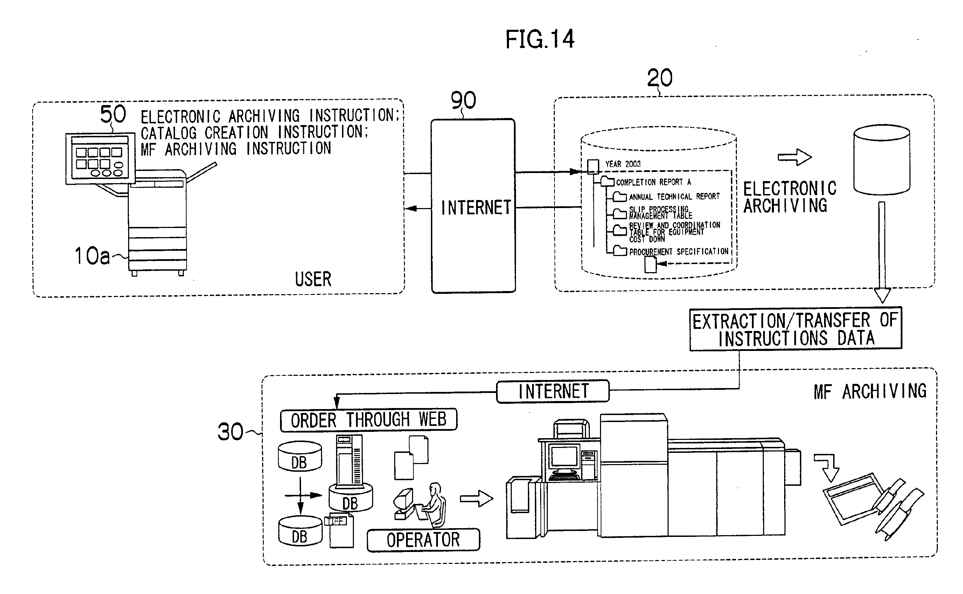

As shown in Fig. 14, according to the film archiving system of this embodiment, it is possible to store manuscripts read and digitized (scanned and digitized manuscripts) by the complex digital machine 10a, and manuscripts inputted as electronic files (born-digital manuscripts) by a user terminal 60, as electronic archives by the electronic file storage server 20 located at an electronic archiving site via the Internet 90. In addition, it is also possible to convert and store the electronic manuscripts as the MF archives by the film recording device 30 located at a MF archiving site as necessary. Furthermore, it is also possible to direct creation of a catalog and create it before or after directing the MF archiving.

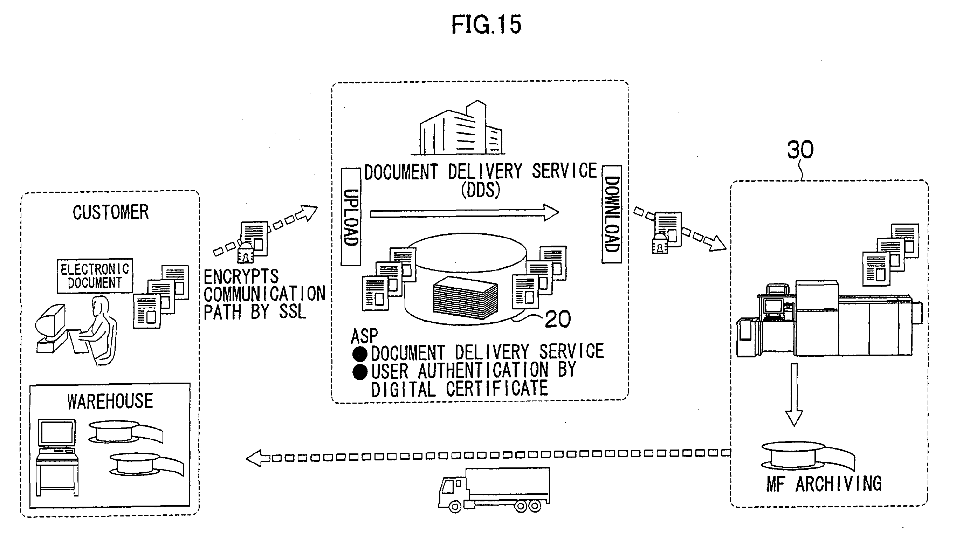

Fig. 15 is a schematic diagram showing a service provided while security of a communication path is ensured. As shown in Fig. 15, while the communication path is encrypted by SSL (secure socket layer) or the like for transfer when the scanned digital and born digital manuscripts are uploaded to the electronic file storage server 20, the communication path is also encrypted by SSL or the like for transfer when the they are downloaded from the electronic file storage server 20 to the film recording device 30. A microfilm recorded manuscripts is delivered to a delivery destination specified by a user by a transportation agent.

Though description has been made on the flow of processing in the case where the instruction sheet is an electronic archiving instruction or for the MF archiving with reference to Figs. 9 to 13, it is, of course, possible to direct creation of a catalog of electronic files stored in the electronic file storage server 20 in accordance with the catalog creation instruction shown in Fig. 5.

For example, when manuscripts converted to electronic files and stored in the electronic file storage server 20 are printed out by the complex digital machine 10, a printout direction may be given by using an instruction. In this case, as for manuscripts which have already been MF archived, a mark indicating to that effect may be attached to the corner of the sheet.

Each of the items shown individually and specifically in the above description for instruction contents of instruction sheets, file information, film archiving condition, and a prediction result of the MF archiving is only as an example, and it is, of course, possible to include other items within a range not departing from the spirit of the present invention.

For example, the file information may include a format of original data, and the format of original data may be stored as information together with an electronic file. This may be utilized, for example, for image editing processing in the MF archiving or for reproduction of the original data.

The description has been made on a case where instructions, such as electronic archiving instruction and the MF archiving instruction, are given by using an instruction sheet, with reference to Figs. 9 to 13, but the present invention is not limited thereto. For example, it is also possible to give instructions, such as electronic archiving instruction and the MF archiving instruction, by operating the touch panel and the buttons from the operation panel 15 of the complex digital machine 10 similarly to using an instruction sheet.

The description has been made on a case where manuscripts scanned and digitized by the complex digital machine 10 are recorded to a microfilm with reference to Figs. 9 to 13, but the present invention is not limited thereto. For example, the present invention can be applied to a case where manuscripts scanned by the high-speed scanner 40 only for reading manuscripts shown in Fig. 1 and digitized is recorded to a microfilm 3.

Furthermore, the present invention can be also applied to the case to cause the film recording device 30 to record to a microfilm by transferring the electronic files converted to a microfilm from the electronic file storage server 20 to the film recording device 30, instead of a case to cause the electronic file storage server 20 electronically to archive the electronic files in which are originally generated as digital files by inputting with the user terminal 60 such as a personal computer so as to generate a microfilm as shown in Fig. 1.

It should be understood, however, that there is no intention to limit the invention to the specific forms disclosed, but on the contrary, the invention is to cover all modifications, alternate constructions and equivalents falling within the scope of the invention as expressed in the appended claims.

## Claims

1. A film archiving system which comprises a manuscript sending terminal (10, 40, 60) corresponding to each user, which sends a manuscript converted to an electronic file, and a film (3) recording device (30) which records the manuscript in a film (3) by uploading the manuscript converted to the electronic file from the manuscript sending terminal (10, 40, 60) via a network, **characterized in that**:
the manuscript sending terminal (10, 40, 60) comprises a manuscript converting device (70) which converts the manuscript to the electronic file, and a first communication device (100e) which sends the manuscript converted to the electronic file in each of the manuscript sending terminal; and
the film recording device (30) comprises a second communication device (32) which receives the manuscript which is sent from the manuscript sending terminal (10, 40, 60), and a recording device (38) which records the received the manuscript in a film (3).

2. The film archiving system as defined in claim 1, **characterized in that**:
the manuscript sending terminal (10, 40, 60) further comprises a setting device (100c) which sets up a film (3) archiving condition to the recording device (38);
the first communication device (100e) sends the film archiving condition set by the setting device (100c);
the second communication device (32) receives the film archiving condition sent from the first communication device (100e); and
the recording device (38) records the manuscript converted to the electronic file in the film (3) so as to satisfy the film archiving condition received by the second communication device (32).

3. The film archiving system as defined in claim 2, **characterized in that**: the film archiving condition set by the setting device (100c) includes a classification condition according to the film (3) such as a roll-type (3a) or sheet-type microfilm (3b), and a black-and-white or color film.

4. The film archiving system as defined in claim 2, **characterized in that**: the film archiving condition set by the setting device (100c) includes at least one of the following image allocation information:
(1) image allocation information which indicates whether to record the manuscript only in portrait or both in portrait and in landscape;
(2) image allocation information which indicates whether to record the manuscript of a larger size than a standard-size in the film by dividing the manuscript into multiple pieces or by reducing the size thereof;
(3) image allocation information which indicates whether to record the manuscript of smaller size than the standard-size in the film by scaling the manuscript down smaller size than the standard-size or by enlarging the manuscript to be the same size as the size of the standard-size manuscript.

5. The film archiving system as defined in claim 2, **characterized in that**:
the film recording device (30) further comprises a prediction device (34) which predicts a result of archiving the received manuscript based on a file information including number and size of the manuscript converted to the electronic file, and on the film archiving condition set by the setting device (100c);
the second communication device (32) sends the predicted result by the prediction device (34) to the manuscript sending terminal of an appropriate user; and
the manuscript sending terminal (10, 40, 60) further comprises an output device (100f) which outputs the predicted result received by the first communication device (100e).

6. The film archiving system as defined in claim 1, **characterized in that**:
the film recording device (30) further comprises a setting device (100c) which sets up a film archiving condition to the recording device (38); and
the recording device (38) records the manuscript converted to the electronic file in the film (3) so as to satisfy the film archiving condition set up by the setting device (100c).

7. The film archiving system as defined in claim 6, **characterized in that**: the film archiving condition set by the setting device (100c) includes a classification condition according to the film (3) such as a roll-type (3a) or sheet-type microfilm (3b), and a black-and-white or color film.

8. The film archiving system as defined in claim 6, **characterized in that**: the film archiving condition set by the setting device (100c) includes at least one of the following image allocation information:
(1) image allocation information which indicates whether to record the manuscript only in portrait or both in portrait and in landscape;
(2) image allocation information which indicates whether to record the manuscript of a larger size than a standard-size in the film (3) by dividing the manuscript into multiple pieces or by reducing the size thereof;
(3) image allocation information which indicates whether to record the manuscript of smaller size than the standard-size in the film (3) by scaling the manuscript down smaller size than the standard-size or by enlarging the manuscript to be the same size as the size of the standard-size manuscript.

9. The film archiving system as defined in claim 1, **characterized by** further comprising: a storage server (20) which electronically archives the manuscript uploaded from the manuscript sending terminal (10, 40, 60), and then transfers the manuscript directed to be film archived from among the electronically archived manuscript to the film recording device (30).

10. The film archiving system as defined in claim 9, **characterized in that**:
the storage server (20) sends a catalog of electronic archives of a corresponding user to the manuscript sending terminal (10, 40, 60) when receiving instructions requesting a catalog of electronic archives; and
the manuscript sending terminal (10, 40, 60) further comprises an output device (100f) which outputs the catalog of the electronic archives received via the first communication device (100e).

11. The film archiving system as defined in claim 9, **characterized in that**: the storage server (20) sends the catalog of the electronic archives with identification information added thereto, the identification information indicating, for each of the electronic archives, whether or not the electronic archive is the film archived manuscript.

12. The film archiving system as defined in claim 1, **characterized in that** the film recording device (30) records the manuscript in the film (3) for each period preset for the each user.

13. The film archiving system as defined in claim 1, **characterized in that** the film recording device records the manuscript of the corresponding user when amount of the film to be used for film archiving and total number of frames to be film archived reach a setting value preset for the each user.

14. The film archiving system as defined in claim 1, **characterized in that**:
the manuscript sending terminal (10, 40, 60) further comprises a direction device (100b) which directs a film archiving of the uploaded manuscript;
the first communication device (100e) sends instruction contents which are directed by the direction device (100b); and
the film recording device (30) records the manuscript of the corresponding user in the film (3) when receiving the directed film archiving via the second communication device (32).

15. A method for film archiving, **characterized by** comprising the steps of:
sending a manuscript which is converted to an electronic file, and a predetermined instruction contents, from a manuscript sending terminal (10, 40, 60) corresponding to each user via a communication device (32, 100e);
receiving the manuscript converted to the electronic file and the predetermined instruction contents via a network;
predicting a archiving result of the received manuscript based on file information including a number and a size of the manuscript converted to the electronic file, and on a predetermined film archiving condition;
sending the predicted archiving result to the manuscript sending terminal (10, 40, 60) of the corresponding user;
receiving and outputting the predicted archiving result; and
recording the manuscript for which the archiving result has been predicted to a film when it is directed to perform film archiving.
